# NEW EUROPEAN PATENT SPECIFICATION

(11) **EP 0 570 215 B2**
(45) Date of publication and mention of the opposition decision: **27.08.2008**
(45) Mention of the grant of the patent: 02.11.2000
(21) Application number: 93303692.3
(22) Date of filing: 12.05.1993
(51) Int. Cl.: B32B 7/14, B32B 27/12, E04D 5/06

(54) **Use of improved liquid impermeable and liquid vapour permeable laminates as roofing underlay material**
Verwendung von dampfdurchlässigen, flüssigkeitsundurchlässigen Verbundstoffen als Dachuntersbahn
Utilisation des matériaux composites imperméables aux liquides et perméables à la vapeur comme matériaux sous-toiture

(30) Priority: 13.05.1992 GB 9210229
(43) Date of publication of application: 18.11.1993
(73) Proprietor: DON & LOW LIMITED, Angus DD8 1FR (GB)
(72) Inventor: Ferrar, Andrew Nicholas, Dr., West Ferry, Dundee DD5 1NA (GB); Simpson, George, Forfar, Angus DD8 3LY (GB); Squires, Leslie James, Dr., Rosemount, Blairgowrie PH10 6LA (GB)
(74) Representative: Moreland, David

(56) References cited:
- EP-A- 0 169 308
- EP-A- 0 288 257
- EP-A- 0 309 073
- EP-A- 0 378 015
- EP-A- 0 391 661
- EP-B- 0 066 672
- DE-A- 1 945 686
- DE-A- 3 538 597
- GB-A- 1 220 405
- GB-A- 1 341 605
- US-A- 3 855 046
- US-A- 4 302 496
- US-A- 4 433 026
- US-A- 4 443 511
- US-A- 4 582 750
- US-A- 4 684 568
- US-A- 4 761 324
- US-A- 4 766 029
- US-A- 5 208 098

## Description

This invention relates to the use of a liquid impermeable and liquid vapour permeable laminate as a rooting underlay material.

Various films or membranes of coextruded monolayer construction are available which, by virtue of a plurality of micropores or by molecular diffusion mechanisms, have the characteristics of providing a barrier to, for example, aqueous liquids while at the same time allowing the passage of moisture vapour. A microporous membrane having such properties is made by Exxon Corporation under the trade name "Exxaire" and is a polyolefinic membrane with excellent vapour transport characteristics. However, such membranes typically possess inadequate tensile strength properties and low resistance to tear for unsupported use and in many applications require to be combined with other materials to improve these properties.

It is an object of the present invention to provide a laminate as a roofing underlay material incorporating such a barrier membrane.

It is an object of a further aspect of the present invention to provide a laminate as a roofing underlay material incorporating such a membrane in which the membrane forms the inner layer in a combination of three or more layers.

According to the present invention there is provided use of a laminate as a roofing underlay material, wherein said laminate comprises;
a liquid impermeable and liquid vapour permeable microporous membrane and supporting substrates provided on both sides of the membrane, the membrane and the substrates being intermittently bonded to preserve the liquid vapour transmission properties of the membrane, wherein one of the substrates is a woven fabric layer, and one of the substrates is a spunbonded polymeric non-woven material.

Preferably the woven fabric may be in the form of a scrim intermittently bonded to one of the other laminate components.

Methods of producing spunbonded polymeric non-woven materials are described, for example, in UK Patents Nos. 203,763, 203,764, 203,765 and 204,071. The substrate may be formed as a web and may be formed over a wide range of weights typically, but not exclusively, from 10 g/m² to 200 g/m². Preferably the webs are of weight from 30 g/m² to 90 g/m². For certain applications it may be desirable to impart particular characteristics, such as flame retardancy, hydrophobicity, and anti static properties, to the spunbond web by addition to the polymer melt from which the web is formed or by subsequent application of appropriate coatings.

The preferred form of substrate provides a significant contribution to the desirable strength and stability properties of the laminate and provides protection against mechanical damage to the membrane.

The membrane is preferably of coextruded monolayer construction having a plurality of micropores to provide the barrier to liquid while allowing the passage of liquid vapour.

The woven fabric layer preferably provides the laminate with very high tensile strengths and resistance to tear as well as dimensional stability. Preferably the woven fabric is based upon woven polyolefinic tapes, such as polypropylene. Where it is desirable to impart a high degree of dimensional stability woven materials incorporating bicomponent tape are particularly effective, an example of such a material being manufactured by the applicants under the Bondweave trade mark.

These woven fabrics are composed of coextruded, bicomponent tapes having a propylene homopolymer core with propylene copolymer surface. The copolymer softens at a temperature say in the range 100 - 130°C so that it can be thermally bonded to the vapour permeable membrane by selection of the appropriate copolymer without affecting the strength of the woven scrim substrate. Furthermore, the softening point of the copolymer can be selected so that it bonds to the membrane causing minimal disruption to the structure of the membrane.

Alternatively, the layers of the laminate to be used according to the present invention may be bonded together by means of an adhesive applied in a discontinuous manner. This may be accomplished by, for example, gravure or rotary screen adhesive application, adhesive jet application, spray applications such as hot melt spray or any of the relevant techniques whereby adhesives may be applied in a manner which gives an adequate control of the percentage of bonded area to be achieved. Such adhesive bonding is particularly useful when bonding sheets of chemically and physically dissimilar materials.

Most preferably, the component sheets of the laminate to be used according to the present invention are thermally bonded. Thermal bonding may be achieved using a combination of heat and pressure and an intermitted bond pattern. The bonded area is preferably 5% to 50% of the surface area of the laminated layers, and most preferably 14% to 20% of the surface area. The temperature and pressures selected for the bonding process arc chosen to ensure an adequate thermal bond between the different sheet materials whilst minimising any adverse physical effects to the components. This is particularly important with respect to the membrane layer where inappropriate lamination conditions may result in an unacceptable amount of "pin-holing" with a consequent reduction in barrier properties.

With thermal bonding, the achievement of an adequate and permanent bonding between the different layers requires that the materials are compatible, that is the materials should have broadly similar softening temperatures and be sufficiently chemically compatible such that autogenous bonding occurs under conditions of appropriate heat and pressure.

Thermally bonded laminates have identifiable inherent advantages when compared to equivalent adhesively bonded structures, including flexibility in processing in that the thermal bonding may be conducted off-line, or in-line where lamination is achieved simultaneously with the formation of the other layers and the preferred fabric layer, more even weight distribution across the laminate; higher strength to weight ratios due to absence of an adhesive layer; improved flexibility; the products are free from odours or pH variation which may occur due to the presence of adhesive; better control of bonded area; and the products are more easily recycled as the thermally bonded structure would preferably consist of polymer or polymer blends of a similar type, for example 100% polyolefin.

It is a desired objective of the preferred embodiment of the invention to provide as high a moisture or liquid vapour permeability as possible in the finished laminate to be used as a roofing underlay material, compared to that of the unlamented membrane. Surprisingly, it has been found that the moisture vapour permeability is not suppressed to the degree expected by the above techniques. It would be expected, for example, that thermal bonding would eliminate the complex structure of micropores in the area of the thermal bond with a subsequent reduction in the ability to transport moisture vapour in that area. However, it has been found that while there is an observed reduction in the moisture vapour permeability this is not in proportion to the bonded area.

Tests of moisture vapour permeability to ASTM F903 gave figures of 8000 g/m²/24 hr for an unsupported microporous film and 7500 g/m²/24 hr for the same membrane thermally laminated to a spunbonded non-woven fabric with a 19% bonding area. A two component thermal laminate under an alternative test method (BS3177) had a moisture vapour permeability of 17.80 g/m²/24 hr, whereas a similar structure combined adhesively with a further spunbonded non-woven fabric layer, had a moisture vapour permeability of 1687 g/m²/24 hr, indicating a reduction of only approximately 5% in moisture vapour permeability with a bonding area and hence an apparent reduction in open area of greater than 20%.

Thus, utilising the present invention it has been found possible to form composite structures with a high degree of bonding between the component layers of a laminate while maintaining a surprising level of moisture vapour permeability. This is of particular benefit where the strength and the physical stability of the composite structure under a wide range of conditions are of importance, for example, in roofing underlay applications. Roofing underlays are ideally strong, that is possess good tensile strength, burst strength and nail tear properties, are waterproof, are adequately physically stable over an extended period of time (minimum 10 years), and capable of maintaining these properties over a wide temperature range, from sub zero to 80°C. Moisture vapour permeability is an added advantage in helping to obviate the risk of condensation in the roof structure.

These aspects of the present invention will now be described, by way of example, with reference to the accompany drawing which shows a somewhat schematic cross-section of a laminate in accordance with an embodiment of the present invention.

The illustrated composite or laminate 10 comprises a microporous membrane 12 of 23 g/m² basis weight, bonded to a UV stabilised spunbonded non-woven fabric 14 of 80 g/m² basis weight by thermal bonding using an intermittent diamond pattern emboss pattern 16 with an embossed area of 19%. These components 12,14 are further laminated to a woven UV stabilised polypropylene fabric 18 by an intermittent adhesive bonding technique such that the microporous membrane 12 forms Lhe inner layer between the two fabric layers 14, 18. The adhesive is indicated by reference numeral 20.

In this structure the spunbonded fabric layer 14 may conveniently be formed simultaneously with the thermal lamination of the layer 14 to the film 12 and acts to provide mechanical protection for the film 12, while the main strength and stability characteristics of the composite 10 are provided by the woven fabric 18.

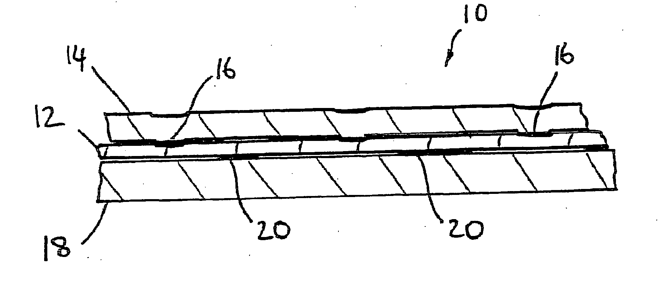

## Claims

1. Use of a laminate (10) as a roofing underlay material, wherein said laminate comprises: a liquid impermeable and liquid vapour permeable microporous membrane (12) and supporting substrates (14, 18) provided on both sides of the membrane, the membrane and the substrates being intermittently bonded (16, 20) to preserve the liquid vapour transmission properties of the membrane, wherein one of the substrates is a woven fabric layer, and one of the substrates is a spunbonded polymeric non-woven material (14).

2. Use of a laminate according to claim 1, wherein the woven fabric of said laminate is in the form of a scrim intermittently bonded to one of the other laminate components.

3. Use of a laminate according to claim 2, wherein the spunbonded non-woven substrate (14) of said laminate is formed as a web to be subsequently calender bonded simultaneously with thermal lamination to the membrane (12).

4. Use of a laminate according to claim 3, wherein the web (14) of said laminate is of a weight of between 10 g/m² and 200 g/m².

5. Use of a laminate according to claim 4, wherein the web (14) of said laminate is of a weight of between 30 g/m² and 90 g/m².

6. Use of a laminate according to any of the preceding claims, wherein the membrane (12) of said laminate is of monolayer construction.

7. Use of a laminate according to any one of the preceding claims, wherein said woven fabric substrate (18) is formed of woven polyolefinic tapes.

8. Use of a laminate according to claim 7, wherein the woven fabric (18) of said laminate is formed of bicomponent tapes.

9. Use of a laminate according to any of the preceding claims, wherein the layers of said laminate are bonded together by means of an adhesive applied in a discontinuous manner.

10. Use of a laminate according to any one of claims 1 to 9, wherein the layers of said laminate (12, 14, 18) are thermally bonded.

11. Use of a laminate according to any of the preceding claims, wherein the bonded area (16, 20) of said laminate forms between 5% and 50% of the surface area of the laminated layers (12, 14, 18).

12. Use of a laminate according to claim 15, wherein the bonded area (16, 20) of said laminate forms between 14% and 20% of the surface area of the laminated layers (12, 14, 18).

## Patentansprüche

1. Verwendung eines Laminats (10) als Abdeckungsunterlagenmaterial, wobei das Laminat umfaßt: eine flüssigkeitsundurchlässige und für Dampf einer Flüssigkeit durchlässige mikroporöse Membran (12) sowie Stützsubstrate (14, 18), die auf beiden Seiten der Membran vorgesehen sind, wobei die Membran und die Substrate intermittierend verbunden (16, 20) sind, um die Durchlässigkeitseigenschaften der Membran für Dampf einer Flüssigkeit zu erhalten, wobei eines der Substrate eine Gewebestoffschicht ist und eines der Substrate ein spinngebundenes, polymeres Vliesmaterial (14) ist.

2. Verwendung eines Laminats gemäß Anspruch 1, wobei der Gewebestoff des Laminats in Form von Mull vorliegt, welcher intermittierend mit einer der anderen Laminatkomponenten verbunden ist.

3. Verwendung eines Laminats gemäß Anspruch 2, wobei das spinngebundene Vliessubstrat (14) des Laminats als Bahn zur anschließenden Kalandrierbindung gleichzeitig mit einer thermischen Laminierung mit der Membran (12) gebildet ist.

4. Verwendung eines Laminats gemäß Anspruch 3, wobei die Bahn (14) des Laminats ein Gewicht zwischen 10 g/m² und 200 g/m² aufweist.

5. Verwendung eines Laminats gemäß Anspruch 4, wobei die Bahn (14) des Laminats ein Gewicht zwischen 30 g/m² und 90 g/m² aufweist.

6. Verwendung eines Laminats gemäß einem der vorhergehenden Ansprüche, wobei die Membran (12) des Laminats eine einlagige Konstruktion aufweist.

7. Verwendung eines Laminats gemäß einem der vorhergehenden Ansprüche, wobei das Gewebestoffsubstrat (18) aus Gewebepolyolefinbändern gebildet ist.

8. Verwendung eines Laminats gemäß Anspruch 7, wobei der Gewebestoff (18) des Laminats aus Bikomponentenbändern gebildet ist.

9. Verwendung eines Laminats gemäß einem der vorhergehenden Ansprüche, wobei die Schichten des Laminats durch ein Haftmittel miteinander verbunden sind, welches in einer diskontinuierlichen Weise aufgetragen ist.

10. Verwendung eines Laminats gemäß einem der Ansprüche 1 bis 9, wobei die Schichten des Laminats (12, 14, 18) thermisch gebunden sind.

11. Verwendung eines Laminats gemäß einem der vorhergehenden Ansprüche, wobei der verbundene Bereich (16, 20) des Laminats zwischen 5 % und 50 % des Oberflächenbereichs der laminierten Schichten (12, 14, 18) bildet.

12. Verwendung eines Laminats gemäß Anspruch 15, wobei der verbundene Bereich (16, 20) des Laminats zwischen 14 % und 20 % des Oberflächenbereichs der laminierten Schichten (12, 14, 18) bildet.

## Revendications

1. Utilisation d'un stratifié (10) en tant que matériau de doublure pour toiture, ledit stratifié comprenant : une membrane microporeuse (12), imperméable aux liquides et perméable à la vapeur de liquides et des substrat de soutien (14,18) de chaque côté de la membrane, la membrane et les substrats étant fixés (16, 20) entre eux de manière intermittente, afin de préserver les propriétés de transmission de vapeur de liquides de la membrane dans laquelle un des stratifiés est une couche en nappe tissée et un des stratifiés est en une matière non tissée en polymère filé-lié (14).

2. Utilisation d'un stratifié selon la revendication 1, dans lequel la nappe tissée dudit stratifié se présente sous la forme d'un canevas, fixé de manière intermittente à l'un des autres éléments constitutifs du stratifié.

3. Utilisation d'un stratifié selon la revendication 2, dans lequel le substrat non tissé en polymère filé-lié (14) dudit stratifié est conformé en une bande continue pour être ensuite fixé par calandrage en même temps qu'une couche d'isolation thermique, à la membrane (12).

4. Utilisation d'un stratifié selon la revendication 3, dans lequel la bande continue (14) dudit stratifié a un poids compris entre 10 g/m² et 200 g/m².

5. Utilisation d'un stratifié selon la revendication 4, dans lequel la bande continue (14) dudit stratifié a un poids compris entre 30 g/m² et 90 g/m².

6. Utilisation d'un stratifié selon l'une quelconque des revendications précédentes, dans lequel la membrane (12) dudit stratifié a une structure monocouche.

7. Utilisation d'un stratifié selon l'une quelconque des revendications précédentes, dans lequel ledit substrat en nappe tissée (18) est formé de rubans en polyoléfine tissés.

8. Utilisation d'un stratifié selon la revendication 7, dans lequel la nappe tissée (18) dudit stratifié est faite de rubans bicomposants.

9. Utilisation d'un stratifié selon l'une quelconque des revendications précédentes, dans lequel les couches dudit stratifié sont fixées les unes aux autres au moyen d'un adhésif appliqué de manière discontinue.

10. Utilisation d'un stratifié selon l'une quelconque des revendications 1 à 9, dans lequel les couches (12, 14, 18) dudit stratifié sont thermosoudées.

11. Utilisation d'un stratifié selon l'une quelconque des revendications précédentes, dans lequel la surface de liaison (16, 20) dudit stratifié représente entre 5 % et 50 % de la superficie des couches stratifiées (12, 14, 18).

12. Utilisation d'un stratifié selon la revendication 11, dans lequel la surface de liaison (16, 20) dudit stratifié représente entre 14 % et 20 % de la superficie des couches stratifiées (12, 14, 18).
